# EUROPÄISCHE PATENTSCHRIFT

(11) **EP 3 930 857 B1**
(45) Veröffentlichungstag und Bekanntmachung des Hinweises auf die Patenterteilung: **04.06.2025**
(21) Anmeldenummer: 20722469.2
(22) Anmeldetag: 30.03.2020
(51) Int. Cl.: A62C 3/07, B60D 5/00, B61D 17/22

(54) **FALTENBALG, FAHRZEUG UND SCHIENENFAHRZEUG**
BELLOWS, VEHICLE AND RAIL VEHICLE
SOUFFLET, VÉHICULE ET VÉHICULE FERROVIAIRE

(30) Priorität: 30.04.2019 DE 102019206219
(43) Veröffentlichungstag der Anmeldung: 05.01.2022
(73) Patentinhaber: Siemens Mobility GmbH, 81739 München (DE)
(72) Erfinder: WEIGEL, Henning, 47807 Krefeld (DE)
(74) Vertreter: Siemens Patent Attorneys
(86) Internationale Anmeldenummer: PCT/EP2020/058909
(87) Internationale Veröffentlichungsnummer: WO 2020/221530

(56) Entgegenhaltungen:
- EP-A1- 0 275 365
- EP-A1- 1 990 563
- US-A1- 2011 290 146
- US-A1- 2017 297 638

## Beschreibung

Die Erfindung betrifft einen Faltenbalg, insbesondere für einen Fahrzeugverbindungsübergang, mit zumindest einer Textilschicht, nach dem Oberbegriff von Anspruch 1.

Ein solcher Faltenbalg ist beispielsweise aus der US 2011 /290146 A1 bekannt. Eine weitere Ausführungsform eines Faltenbalgs ist in der US 2017/297638 A1 offenbart.

Ein Faltenbalg ist im Allgemeinen durch seine Auszugsfähigkeit gekennzeichnet. Um diese Auszugsfähigkeit zu erreichen, kann die oben genannte Textilschicht des Faltenbalgs beispielsweise ziehharmonikaartig in Falten liegen. Weiter kann die Textilschicht elastisch, d. h. in sich dehnbar, sein. Eine elastische Textilschicht kann zum Beispiel eine gummierte Textilschicht mit gewelltem/gestauchtem Fadenverlauf sein. Derartige Faltenbälge sind beispielsweise in EP 0 275 365 A1 beschrieben.

In der Regel ist die Textilschicht mit einer gummielastischen Beschichtung beschichtet. Beispielsweise kann die Beschichtung der ersten Textilschicht ein Elastomer, ein thermoplastisches Elastomer und/oder ein Silikon sein. Als Elastomer kann beispielsweise chlorsulfoniertes Polyethylen verwendet werden.

Weiter kann die gummielastische Beschichtung der Textilschicht zumindest ein Flammenschutzmittel enthalten. Auf diese Weise kann ein Schutz geben Entzündung und/oder Brandweiterleitung gewährleistet werden.

Als Flammenschutzmittel sind beispielsweise halogenhaltige Flammenschutzmittel bekannt. Ferner sind halogenfreie und antimonfreie Flammenschutzmittel bekannt.

Trotz der Beschichtung bietet eine derartige Textilschicht jedoch nur einen unzureichenden Feuerwiderstand und somit - je nach Anwendungsfall - einen unzureichenden Brandschutz.

Ein derartiger Faltenbalg kann für einen Fahrzeugverbindungsübergang, beispielsweise für einen Wagenübergang eines Schienenfahrzeugs, eingesetzt werden. Bricht im Inneren des Fahrzeugs ein Brand aus, so bietet der bisherige Faltenbalg einen unzureichenden Schutz für außen liegende Komponenten wie beispielsweise Kabelstränge.

Eine Aufgabe der Erfindung ist es, einen Faltenbalg mit verbesserten Brandschutzeigenschaften anzugeben.

Die Aufgabe wird gelöst durch einen Faltenbalg mit den Merkmalen des Anspruchs **1.**

Auf diese Weise kann der Feuerwiderstand des Faltenbalgs bei einem Brand für mindestens 10 min bestehen.

Der Feuerwiderstand kann beispielsweise nach der Norm DIN 4102 und/oder nach der Norm EN 13501 bestimmt werden.

Es ist vorteilhaft, wenn der Faltenbalg einen Feuerwiderstand von mindestens 15 min aufweist.

Zweckmäßigerweise entspricht der Feuerwiderstand mindestens der Feuerwiderstandsklasse E10. Insbesondere kann Feuerwiderstand mindestens der Feuerwiderstandsklasse E15 entsprechen.

Auf diese Weise kann der Faltenbalg bei einem Brand für mindestens 10 min, insbesondere für mindestens 15 min, einen Raumabschluss E ausbilden.

Weiter ist es bevorzugt, wenn der Feuerwiderstand mindestens der Feuerwiderstandsklasse EI10 entspricht. Insbesondere kann Feuerwiderstand mindestens der Feuerwiderstandsklasse EI15 entsprechen.

Auf diese Weise kann der Faltenbalg bei einem Brand für mindestens 10 min, insbesondere für mindestens 15 min, einen Raumabschluss E ausbilden sowie eine Wärmedämmung I gewährleisten.

Vorzugsweise erreicht die Textilschicht zumindest einen Feuerwiderstand von 10 min. Insbesondere kann die Textilschicht zumindest einen Feuerwiderstand von 15 min erreichen.

Der der Feuerwiderstand der zweiten Textilschicht kann zumindest der Feuerwiderstandsklasse E10, besonders bevorzugt E15, entsprechen. Insbesondere kann der der Feuerwiderstand der zweiten Textilschicht zumindest der Feuerwiderstandsklasse EI10, besonders bevorzugt EI15, entsprechen.

Es ist vorteilhaft, wenn die zweite Textilschicht schwer entflammbar ist. Weiter ist es vorteilhaft, wenn die zweite Textilschicht zumindest schwer brennbar, insbesondere nicht brennbar, ist. Auf diese Weise kann ein Schutz geben Entzündung und/oder Brandweiterleitung gewährleistet werden.

Eine Textilschicht kann beispielsweise ein Gewebe, ein Gewirke, ein Gelege oder Ähnliches sein.

Sinnvollerweise umfasst die Textilschicht Fasern. Es ist vorteilhaft, wenn die Fasern der Textilschicht schwer entflammbar sind. Weiter ist es vorteilhaft, wenn die Fasern der Textilschicht zumindest schwer brennbar, insbesondere nicht brennbar, sind.

Die Textilschicht kann beispielsweise Aramidfasern aufweisen. Weiter kann die Textilschicht beispielsweise Mineralfasern aufweisen. Die Mineralfasern können z. B. Glasfasern und/oder Steinwollfasern sein.

Es ist vorgesehen, dass die Textilschicht als eine Brandschutztextilschicht ausgebildet ist. Die Brandschutztextilschicht kann insbesondere ein Brandschutzgewebe sein.

Die Brandschutztextilschicht weist einen Dämmschichtbildner auf. Insbesondere kann die zweite Textilschicht mit dem Brandschutzbildner beschichtet sein, um die Brandschutztextilschicht auszubilden.

Zweckmäßigerweise ist der Dämmschichtbildner dazu ausgebildet/eingerichtet, unter Hitzeeinwirkung aufzuschäumen. Das heißt, dass der Dämmschichtbildner zweckmäßigerweise ein unter Hitzeeinwirkung aufschäumendes Material ist.

Das heißt, dass der Dämmschichtbildner zweckmäßigerweise unter Hitzeeinwirkung an Volumen zunimmt. Weiter heißt das, dass der Dämmschichtbildner zweckmäßigerweise unter Hitzeeinwirkung an Dichte abnimmt.

Insbesondere können sich beim Aufschäumen unter Hitzeeinwirkung, auch Aufquellen unter Hitzeeinwirkung, Hohlräume innerhalb des Dämmschichtbildners bilden. Die Hohlräume sind vorzugsweise gasgefüllt.

Der aufgeschäumte Dämmschichtbildner wirkt vorzugsweise thermisch isolierend.

Insbesondere kann der Dämmschichtbildner ein intumeszenter Stoff sein.

Ferner kann die Brandschutztextilschicht ein ablatives Brandschutzmaterial aufweisen. Zweckmäßigerweise ist das ablative Brandschutzmaterial dazu ausgebildet/eingerichtet, unter Hitzeeinwirkung Wasser freizusetzen. Das heißt, dass das ablative Brandschutzmaterial zweckmäßigerweise ein unter Hitzeeinwirkung Wasser freisetzendes Material ist. Das heißt, dass das ablative Brandschutzmaterial unter Hitzeeinwirkung zweckmäßigerweise Wasser freisetzt.

Es ist vorteilhaft, wenn das ablative Brandschutzmaterial Wasser bindet. Das heißt, es ist vorteilhaft, wenn in dem ablativen Brandschutzmaterial Wasser gebunden ist.

Das ablative Brandschutzmaterial kann beispielsweise als Hydrat ausgebildet sein, in welchem Wasser gebunden ist. Insbesondere kann das Wasser in Form von Hydratwasser, insbesondere in Form von Kristallwasser, gebunden sein.

Zweckmäßigerweise ist das Hydrat ein Festkörper, insbesondere ein kristalliner Festkörper, in welchem Wasser gebunden ist. Das Hydrat kann beispielsweise ein anorganisches Hydrat sein. Insbesondere kann das Hydrat ein Metall-Hydrat sein.

Insbesondere kann das Hydrat das bisher gebundene Wasser unter Hitzeeinwirkung freisetzen. Bei der Wasserfreisetzung kann das Hydrat in ein Anhydrat umgewandelt werden.

Zweckmäßigerweise verbraucht das ablative Brandschutzmaterial, insbesondere das Hydrat, dann, wenn es Wasser freisetzt, Energie. Das heißt, dass das Wasser bei einer endothermen Reaktion freigesetzt wird. Auf diese Weise kann das ablative Brandschutzmaterial kühlend wirken.

Ferner kann das vom ablativen Brandschutzmaterial freigesetzte Wasser verdunsten und/oder verdampfen. Zweckmäßigerweise wird bei der Verdunstung bzw. bei der Verdampfung Energie verbraucht. Auf diese Weise kann eine weitere Kühlwirkung erzielt werden.

Die Textilschicht kann auch als eine Kombination mehrerer Brandschutztextilschichten ausgebildet sein.

Gemäß der Erfindung umfasst der Faltenbalg eine weitere Textilschicht. Die weitere Textilschicht ist mit einer gummielastischen Beschichtung beschichtet.

Auf diese Weise kann beispielsweise eine Optik eine schalldämmende Wirkung und/oder eine Widerstandsfähigkeit des Faltenbalgs verbessert werden.

Beispielsweise kann die gummielastische Beschichtung der weiteren Textilschicht ein Elastomer, ein thermoplastisches Elastomer und/oder ein Silikon umfassen.

Der gummielastischen Beschichtung der weiteren Textilschicht kann ein Flammschutzmittel zugesetzt sein. Das heißt, dass die gummielastische Beschichtung der weiteren Textilschicht ein Flammschutzmittel aufweisen kann.

Die erstgenannte Textilschicht ist erfindungsgemäßist direkt auf der weiteren Textilschicht aufgebracht. Auf diese Weise ist die weitere Textilschicht mit der erstgenannten Textilschicht zu einem Materialverbund verbunden.

Beispielsweise kann die erstgenannte Textilschicht auf der weiteren Textilschicht aufgeklebt, aufgenäht und/oder anderweitig aufgebracht sein. Insbesondere kann die erstgenannte Textilschicht mit der weiteren Textilschicht verklebt, vernäht, vernietet und/oder anderweitig verbunden sein.

In einer nicht erfindungsgemäßen Ausführungsform kann der Faltenbalg einen luftgefüllten Abstand aufweisen, der zwischen der weiteren Textilschicht und der erstgenannten Textilschicht angeordnet ist. Auf diese Weise kann die erstgenannte Textilschicht beabstandet von der weiteren Textilschicht angeordnet sein.

Es ist sinnvoll, wenn der Faltenbalg einen Innenraum aufweist oder aufspannt. Sinnvollerweise wird der Innenraum des Faltenbalgs von den Textilschichten des Faltenbalgs nach außen hin begrenzt.

Das heißt, wenn der Faltenbalg nur die erstgenannte Textilschicht aufweist, dann wird der Innenraum des Faltenbalgs zweckmäßigerweise von der erstgenannten Textilschicht nach außen hin begrenzt. Wenn der Faltenbalg mehrere Textilschichten, insbesondere die erstgenannte Textilschicht und die weitere Textilschicht, aufweist, dann wird der Innenraum des Faltenbalgs zweckmäßigerweise von diesen Textilschichten nach außen hin begrenzt.

Falls der Faltenbalg für einen Fahrzeugverbindungsübergang verwendet wird, dann ist der Innenraum des Faltenbalgs sinnvollerweise begehbar. Falls der Faltenbalg für ein Fahrzeug verwendet wird, dann ist der Innenraum des Faltenbalgs vorzugsweise als Fahrgastinnenraum oder als Teil eines Fahrgastinnenraums ausgebildet.

Beispielsweise kann die erstgenannte Textilschicht auf einer dem Innenraum zugewandten Seite angeordnet sein. Weiter kann die weitere Textilschicht auf einer vom Innenraum abgewandten Seite angeordnet sein.

Es ist bevorzugt, wenn die erstgenannte Textilschicht auf der vom Innenraum abgewandten Seite angeordnet ist. Die weitere Textilschicht ist vorzugsweise auf der dem Innenraum zugewandten Seite angeordnet.

Weiter ist es möglich, dass die erstgenannte Textilschicht auf der dem Innenraum zugewandten Seite angeordnet und eine weitere solche erstgenannte Textilschicht auf der vom Innenraum abgewandten Seite angeordnet ist. In diesem Fall kann die weitere Textilschicht zwischen der erstgenannten zweiten Textilschicht und der weiteren solchen zweiten Textilschicht angeordnet sein.

Ferner ist es möglich, dass die weitere Textilschicht auf der dem Innenraum zugewandten Seite angeordnet und eine zweite solche weitere Textilschicht auf der vom Innenraum abgewandten Seite angeordnet ist. In diesem Fall kann die erstgenannte Textilschicht zwischen den beiden weiteren Textilschichten angeordnet sein.

Ferner ist die Erfindung gerichtet auf ein Fahrzeug mit zumindest zwei Fahrzeugteilen, die über einen Fahrzeugverbindungsübergang miteinander verbunden sind, und dem zuvor genannten Faltenbalg und/oder eine seiner Weiterbildungen. Der Faltenbalg ist an dem Fahrzeugverbindungsübergang angeordnet.

Unter Verwendung des Faltenbalgs kann die Gefahr eines Übergreifens eines Feuers, welches im Inneren des Fahrzeugs ausgebrochen ist, auf außerhalb des Faltenbalgs liegende Komponenten wie beispielsweise Kabelstränge, welche die beiden Fahrzeugteile miteinander verbinden, reduziert werden.

Das Fahrzeug kann beispielsweise ein Bus, insbesondere ein Gelenkbus, sein.

Das zuvor genannte Fahrzeug kann insbesondere ein Schienenfahrzeug sein. Wenn das Fahrzeug ein Schienenfahrzeug ist, dann sind vorzugsweise die Fahrzeugteile als Wagen ausgebildet. Wenn das Fahrzeug ein Schienenfahrzeug ist, dann ist außerdem vorzugsweise der Fahrzeugverbindungsübergang als Wagenübergang ausgebildet.

Das heißt, die Erfindung ist außerdem gerichtet auf ein Schienenfahrzeug mit zumindest zwei Wagen, die über einen Wagenübergang miteinander verbunden sind, und dem zuvor genannten Faltenbalg und/oder eine seiner Weiterbildungen, wobei der Faltenbalg an dem Wagenübergang angeordnet ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Faltenbalg und dem erfindungsgemäßen Fahrzeug kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine Ansicht eines Faltenbalgs eines Schienenfahrzeugs,
- FIG 2: Querschnitt durch den Faltenbalg aus FIG 1 mit,
- FIG 3: Querschnitt durch einen anderen nicht erfindungsgemäßen Faltenbalg,
- FIG 4: Querschnitt durch einen weiteren nicht erfindungsgemäßen Faltenbalg und
- FIG 5: Längsschnitt durch den Faltenbalg aus FIG 4.

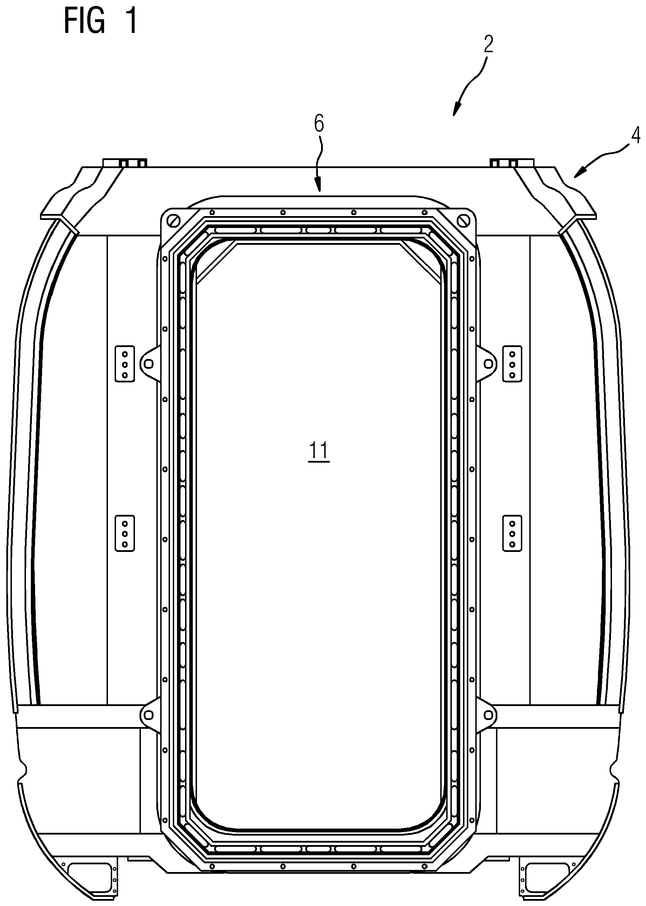

FIG 1 zeigt einen Querschnitt durch ein als Schienenfahrzeug 2 ausgebildetes Fahrzeug. Das Schienenfahrzeug 2 weist zumindest zwei Wagen auf, die über einen als Wagenübergang 4 ausgebildeten Fahrzeugverbindungsübergang miteinander verbunden sind. Außerdem weist das Schienenfahrzeug 2 einen Faltenbalg 6 auf, der an dem Wagenübergang 4 angeordnet ist.

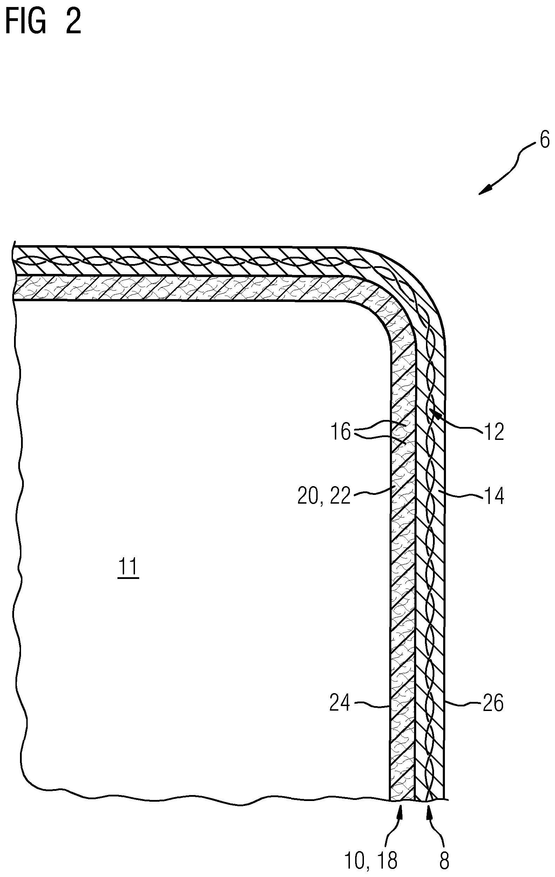

FIG 1 zeigt außerdem eine Ansicht dieses Faltenbalgs 6. In FIG 2 ist ein Querschnitt durch den Faltenbalg 6 (bzw. eines Teils davon) dargestellt.

Der Faltenbalg 6 weist eine erste Textilschicht 8 und eine zweite Textilschicht 10 auf.

Außerdem weist der Faltenbalg 6 einen Innenraum 11 auf, der von den Textilschichten 8, 10 nach außen hin begrenzt wird. Der Innenraum 11 ist begehbar und bildet einen Teil eines Fahrgastinnenraums des Schienenfahrzeugs 2 aus.

Die erste Textilschicht 8 ist als Gewebeschicht 12 ausgeführt.

Die erste Textilschicht 8 ist mit einer gummielastischen Beschichtung 14 beschichtet.

Beispielsweise kann die gummielastische Beschichtung 14 der ersten Textilschicht 8 einen Elastomer, einen thermoplastischen Elastomer und/oder ein Silikon aufweisen. Als Elastomer kann beispielsweise chlorsulfoniertes Polyethylen verwendet werden. Der Beschichtung 14 kann außerdem ein Flammschutzmittel zugesetzt sein.

Das heißt, dass die ersten Textilschicht 8 beispielsweise eine elastomerbeschichtete Gewebeschicht 12, eine thermoplastbeschichtete Gewebeschicht 12 und/oder eine silikonbeschichtete Gewebeschicht 12 sein kann.

Außerdem ist die erste Textilschicht 8 in Längsrichtung des Faltenbalgs 6 (und somit in Längsrichtung des Schienenfahrzeugs 2) ziehharmonikaartig in Falten gelegt.

Die zweite Textilschicht 10 weist einen Feuerwiderstand von mindestens 10 min auf. Das heißt, die zweite Textilschicht 10 erreicht zumindest einen Feuerwiderstand von 10 min. Das heißt, dass der Feuerwiderstand der zweiten Textilschicht 10 bei einem Brand für mindestens 10 min besteht.

Insbesondere bildet die zweite Textilschicht 10 bei einem Brand, insbesondere für mindestens 10 min, einen Raumabschluss E aus.

Weiter kann die zweite Textilschicht 10 bei einem Brand, insbesondere für mindestens 10 min, eine Wärmedämmung I ausbilden/gewährleisten.

Die zweite Textilschicht 10 weist Mineralfasern 16, hier Glasfasern auf. Derartige Fasern sind schwer entflammbar und nicht brennbar.

Insbesondere ist die zweite Textilschicht 10 als eine Brandschutztextilschicht 18 ausgebildet.

Die Brandschutztextilschicht 18 weist - neben den Mineralfasern 16 - ein ablatives Brandschutzmaterial 20 auf. Das ablative Brandschutzmaterial 20 ist ein unter Hitzeeinwirkung Wasser freisetzendes Material.

In diesem Beispiel ist das ablative Brandschutzmaterial 20 ein Hydrat 22, in welchem Wasser in Form von Kristallwasser gebunden ist.

Auf diese Weise kann unter Verwendung der zweiten Textilschicht 10 der Wärmedurchtritt durch den Faltenbalg 6 hindurch verzögert werden. Weiter kann unter Verwendung der zweiten Textilschicht 10 ein Durchbrand durch den Faltenbalg 6 hindurch verzögert werden.

Auf diese Weise erreicht der Faltenbalg 6 einen Feuerwiderstand von mindestens 10 min, insbesondere von mindestens 15 min. Der Feuerweiderstand des Faltenbalgs 6 entspricht mindestens der Feuerwiderstandsklasse E10, insbesondere mindestens E15. Insbesondere kann der Feuerweiderstand des Faltenbalgs 6 mindestens der Feuerwiderstandsklasse EI10, besonders bevorzugt mindestens EI15, entsprechen.

Neben der Brandschutztextilschicht 18 können prinzipiell auch noch weitere Schichten vorgesehen sein.

Die zweite Textilschicht 10 ist auf der ersten Textilschicht 8 aufgebracht.

Da die erste Textilschicht 8 ziehharmonikaartig in Falten gelegt ist und die zweite Textilschicht 10 auf der ersten Textilschicht 8 aufgebracht ist, ist auch die zweite Textilschicht 10 ziehharmonikaartig in Falten gelegt.

Die zweite Textilschicht 10, welche hier als Brandschutztextilschicht 18 ausgebildet ist, ist auf einer dem Innenraum 11 zugewandten Seite 24 angeordnet, wohingegen die erste Textilschicht 8 auf einer vom Innenraum 11 abgewandten Seite 26 angeordnet ist.

Alternativ könnte die zweite Textilschicht 10 auf der vom Innenraum 11 abgewandten Seite 26 angeordnet sein, wohingegen die erste Textilschicht 8 auf der dem Innenraum 11 zugewandten Seite 24 angeordnet sein könnte (nicht gezeigt).

Prinzipiell könnte der Faltenbalg 6 auch nur die zweite Textilschicht 10 - ohne der ersten Textilschicht 8 - aufweisen.

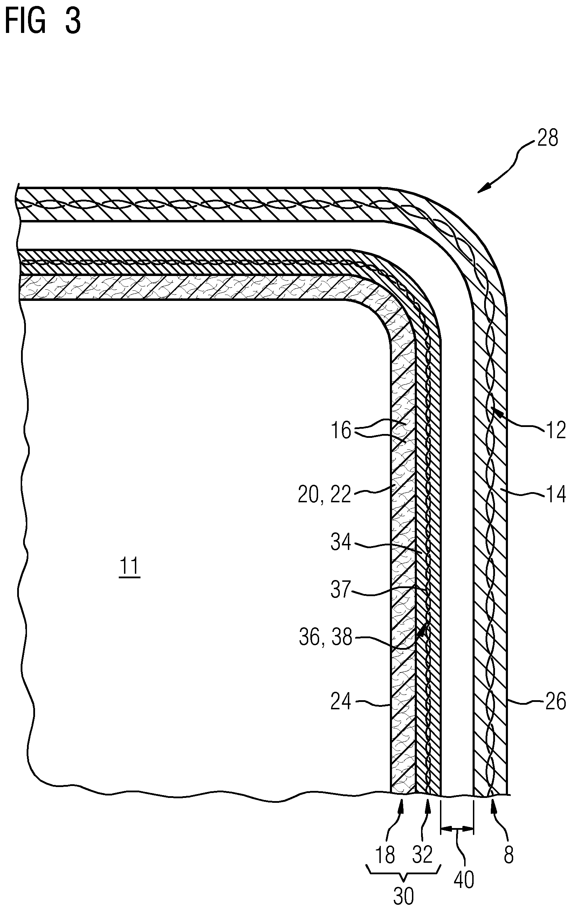

FIG 3 zeigt schematisch einen Querschnitt durch einen anderen nicht erfindungsgemäßen Faltenbalg 28 eines Schienenfahrzeugs.

Die nachfolgende Beschreibung beschränkt sich im Wesentlichen auf die Unterschiede zum Ausführungsbeispiel aus FIG 1 und FIG 2, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Die erste Textilschicht 8 ist mit einer gummielastischen Beschichtung 14 beschichtet.

Die zweite Textilschicht 30 weist - in analoger Weise wie die zweite Textilschicht 10 in FIG 2 - einen Feuerwiderstand auf.

Die zweite Textilschicht 30 ist als eine Kombination mehrerer, hier zweier, Brandschutztextilschichten 18, 32 ausgebildet.

Die erste Brandschutztextilschicht 18 weist Mineralfasern 16 sowie ein ablatives Brandschutzmaterial 20 auf. Das ablative Brandschutzmaterial 20 ist ein unter Hitzeeinwirkung Wasser freisetzendes Material.

Die zweite Brandschutztextilschicht 32 ist als Brandschutzgewebe ausgebildet.

Die zweite Brandschutztextilschicht 32 weist einen Dämmschichtbildner 34 auf. Der Dämmschichtbildner 34 ist ein unter Hitzeeinwirkung aufschäumendes Material.

Ferner weist die zweite Brandschutztextilschicht 32 ein Trägermaterial 36 für den Dämmschichtbildner 34 auf. Das Trägermaterial 36 ist in diesem Beispiel als Glasfasergewebe 38, insbesondere als Glasfilamentgewebe, ausgeführt. Das heißt, dass die zweite Brandschutztextilschicht 32 die Glasfilamente 37 des als Glasfilamentgewebe ausgeführten Glasfasergewebes 38 aufweist.

Die zweite Brandschutztextilschicht 32 der zweiten Textilschicht 10 kann bei Hitzeeinwirkung, insbesondere bei einem Brand, aufschäumen. Die aufgeschäumte Schicht wirkt thermisch isolierend, d. h. wirkt als Dämmschicht.

Auf diese Weise kann unter Verwendung der zweiten Textilschicht 30 der Wärmedurchtritt durch den Faltenbalg 28 hindurch verzögert werden. Weiter kann unter Verwendung der zweiten Textilschicht 30 ein Durchbrand durch den Faltenbalg 28 hindurch verzögert werden.

Auf diese Weise erreicht der Faltenbalg 28 einen Feuerwiderstand von mindestens 10 min, insbesondere von mindestens 15 min.

Die zweite Textilschicht 30 kann weitere Schichten aufweisen. Beispielsweise könnte die zweite Textilschicht 30 eine saugfähige Schicht aufweisen (nicht gezeigt). Beispielsweise könnte die saugfähige Schicht benachbart zu der ersten Brandschutztextilschicht 18 angeordnet sein.

Anstatt der hier im Zusammenhang mit FIG 3 beschriebenen zweiten Textilschicht 30 könnte auch die in FIG 2 beschriebene zweite Textilschicht 10 verwendet werden. Weiter könnte in FIG 2 statt der dort beschriebenen zweiten Textilschicht 10 die hier im Zusammenhang mit FIG 3 beschriebene zweite Textilschicht 30 verwendet werden.

Prinzipiell könnte die zweite Textilschicht 30 auch nur eine der genannten Brandschutztextilschichten 18, 32 aufweisen. Weiter könnte jede der genannten Brandschutztextilschichten 18, 32 auch abgewandelt ausgeführt sein.

Zwischen der ersten Textilschicht 8 und der zweiten Textilschicht 30 ist in diesem Ausführungsbeispiel ein luftgefüllter Abstand 40 angeordnet.

Die zweite Textilschicht 30 ist in analoger Weise wie die erste Textilschicht 8 ziehharmonikaartig in Falten gelegt.

Aufgrund des Abstands 40 kann sich die zweite Textilschicht 30 unabhängig von der ersten Textilschicht 8 bewegen. Insbesondere ist auf diese Weise die zweite Textilschicht 30 unabhängig von der ersten Textilschicht 8 auszugsfähig.

Der luftgefüllter Abstand 40 hat eine zusätzliche thermisch isolierende Wirkung.

Die zweite Textilschicht 30 kann - wie hier gezeigt - auf der dem Innenraum 11 zugewandten Seite 24 angeordnet sein oder kann auf der vom Innenraum 11 abgewandten Seite 26 angeordnet sein (nicht gezeigt).

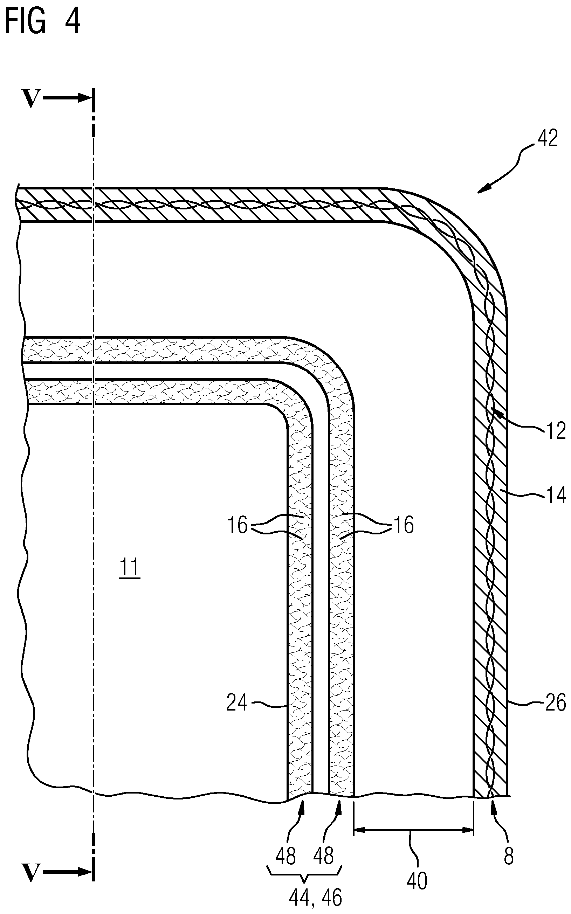

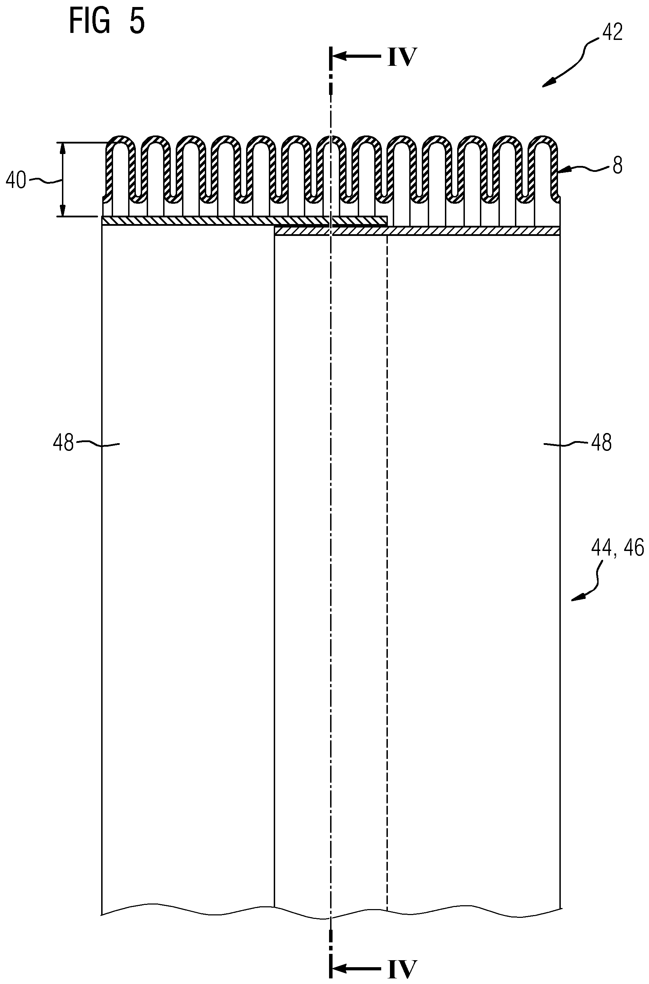

FIG 4 zeigt schematisch einen Querschnitt durch einen weiteren nicht erfindungsgemäßen Faltenbalg 42 eines Schienenfahrzeugs. Außerdem zeigt FIG 5 einen Längsschnitt durch den letztgenannten Faltenbalg 42.

In FIG 4 ist eine Schnittebene V-V eingezeichnet. FIG 5 zeigt den Längsschnitt entlang der Schnittebene V-V. Weiter ist in FIG 5 die Schnittebene IV-IV eingezeichnet. FIG 4 zeigt den Querschnitt entlang der Schnittebene IV-IV.

Die nachfolgende Beschreibung beschränkt sich im Wesentlichen auf die Unterschiede zum Ausführungsbeispiel aus FIG 3, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Die erste Textilschicht 8 ist mit einer gummielastischen Beschichtung 14 beschichtet.

Die zweite Textilschicht 44 weist - in analoger Weise wie die zweite Textilschicht 10 in FIG 2 - einen Feuerwiderstand auf.

Die zweite Textilschicht 44 ist in diesem Ausführungsbeispiel als Glasvlies 46 ausgeführt. Das heißt, dass die zweite Textilschicht 44 als Glasfasern ausgebildete Mineralfasern 16 des Glasvlieses 46 aufweist. Das Glasvlies 46 liegt hier unbeschichtet vor.

Auf diese Weise kann unter Verwendung der zweiten Textilschicht 44 der Wärmedurchtritt durch den Faltenbalg 42 hindurch verzögert werden. Weiter kann unter Verwendung der zweiten Textilschicht 44 ein Durchbrand durch den Faltenbalg 42 hindurch verzögert werden.

Auf diese Weise erreicht der Faltenbalg 42 einen Feuerwiderstand von mindestens 10 min, insbesondere von mindestens 15 min.

Prinzipiell könnte die zweite Textilschicht 44 auch als eine Brandschutztextilschicht, insbesondere eine der zuvor genannten Brandschutztextilschichten 18, 32, oder als eine Kombination mehrerer Brandschutztextilschichten, - beispielsweise analog wie in FIG 2 bzw. in FIG 3 beschrieben - ausgeführt sein. Weiter könnte in FIG 2 oder FIG 3 statt der jeweiligen dort beschriebenen zweiten Textilschicht 10, 30 die hier im Zusammenhang mit FIG 4 beschriebene zweite Textilschicht 44 verwendet werden.

Der Faltenbalg 42 in FIG 4 und FIG 5 weist einen luftgefüllten Abstand 40 auf, der zwischen der ersten Textilschicht 8 und der zweiten Textilschicht 44 angeordnet ist. Der Abstand 40 ist variabel.

In diesem Ausführungsbeispiel weist die zweite Textilschicht 44 zwei Bahnen 48 auf, die lose überlappend angeordnet sind. Die beiden Bahnen 48 der zweiten Textilschicht 44 überlappen in Längsrichtung des Faltenbalgs 42 gesehen im mittleren Bereich (siehe FIG 5). Die Bahnen 48 sind nicht miteinander verbunden.

Auf diese Weise ist die zweite Textilschicht 44, insbesondere unabhängig von der ersten Textilschicht 8, auszugsfähig.

Die Ausgestaltung der zweiten Textilschicht 44 mit den zwei Bahnen 48 ist materialsparend, ist einfach ausführbar sowie bei bereits bestehenden Fahrzeugen einfach nachrüstbar.

In FIG 5 ist die zeichnungsgemäß linke Bahn 48 beispielhaft hinter der zeichnungsgemäßen rechten Bahn 48 angeordnet. Diejenige Kante der zeichnungsgemäßen linken Bahn 48, die von der zeichnungsgemäßen rechten Bahn 48 verdeckt wird, ist in FIG 5 gestrichelt eingezeichnet.

## Patentansprüche

1. Faltenbalg (6, 28, 42), insbesondere für einen Fahrzeugverbindungsübergang (4), mit zumindest einer Textilschicht (10, 30, 44), die Aramidfasern und/oder Mineralfasern (16, 37) aufweist und als zumindest eine Brandschutztextilschicht (18, 32) ausgebildet ist, und einer weiteren Textilschicht (8),
wobei die Brandschutztextilschicht (32) einen Dämmschichtbildner (34) aufweist, welcher dazu ausgebildet ist, unter Hitzeeinwirkung aufzuschäumen, **dadurch gekennzeichnet, dass**
die weitere Textilschicht (8) mit einer gummielastischen Beschichtung (14) beschichtet ist, so dass der Faltenbalg (6, 28, 42) einen Feuerwiderstand von mindestens 10 min aufweist, wobei die weitere Textilschicht(8) mit der erstgenannten Textilschicht (10, 30, 44) zu einem Materialverbund verbunden ist.

2. Faltenbalg (6, 28) nach Anspruch 1,
**dadurch gekennzeichnet, dass**
die Brandschutztextilschicht (18) ein ablatives Brandschutzmaterial (20) aufweist, welches dazu ausgebildet ist, unter Hitzeeinwirkung Wasser freizusetzen.

3. Faltenbalg (6) nach einem der Ansprüche 1 oder 2,
**dadurch gekennzeichnet, dass**
die erstgenannte Textilschicht (10) auf der weiteren Textilschicht (8) aufgebracht ist.

4. Fahrzeug (2), insbesondere Schienenfahrzeug, mit zumindest zwei Fahrzeugteilen, insbesondere Wagen, die über einen Fahrzeugverbindungsübergang (4) miteinander verbunden sind, und einem Faltenbalg (6, 28, 42) nach einem der vorhergehenden Ansprüche, der an dem Fahrzeugverbindungsübergang (4) angeordnet ist.

## Claims

1. Bellows (6, 28, 42), in particular for a vehicle connection gangway (4), with at least one textile layer (10, 30, 44), which has aramid fibres and/or mineral fibres (16, 37) and is embodied as at least one fire protection textile layer (18, 32), and a further textile layer (8),
wherein
the fire protection textile layer (32) has an insulating layer former (34), which is embodied to foam up when exposed to heat, **characterised in that** the further textile layer (8) is coated with a rubber-elastic coating (14), so that the bellows (6, 28, 42) has a fire resistance of at least 10 min, wherein the further textile layer (8) is connected to the first-mentioned textile layer (10, 30, 44) to form a composite material.

2. Bellows (6, 28) according to claim 1,
**characterised in that**
the fire protection textile layer (18) has an ablative fire protection material (20), which is embodied to release water when exposed to heat.

3. Bellows (6) according to one of claims 1 or 2,
**characterised in that**
the first-mentioned textile layer (10) is attached to the further textile layer (8).

4. Vehicle (2), in particular rail vehicle, with at least two vehicle parts, in particular cars, which are interconnected via a vehicle connection gangway (4), and a bellows (6, 28, 42) according to one of the preceding claims, which is arranged at the vehicle connection gangway (4).

## Revendications

1. Soufflet (6, 28, 42) à plis, en particulier pour une intercirculation (4) de véhicule, comprenant au moins une couche (10, 30, 44) textile, qui comporte des fibres d'aramide et/ou des fibres (16, 37) minérales et qui est constituée sous la forme d'au moins une couche (18, 32) de protection contre le feu, et une autre couche (8) textile, dans lequel
la couche (32) textile de protection contre le feu a un formeur (34) de couche isolante, qui est constitué pour mousser sous l'action de la chaleur, **caractérisé en ce que** l'autre couche (8) textile est revêtue d'un revêtement (14) ayant l'élasticité du caoutchouc, de sorte que le soufflet (6, 28, 42) à plis a une résistance au feu d'au moins 10 min, dans lequel l'autre couche (8) textile est reliée à la couche (10, 30, 44) textile mentionnée en premier en un composite de matériau.

2. Soufflet (6, 28) à plis suivant la revendication 1,
**caractérisé en ce que**
la couche (18) textile de protection vis-à-vis du feu a un matériau (20) de protection vis-à-vis du feu ablatif, qui est constitué pour libérer de l'eau sous l'effet de la chaleur.

3. Soufflet (6) à plis suivant l'une des revendications 1 ou 2,
**caractérisé en ce que**
la couche (10) textile mentionnée en premier est déposée sur l'autre couche (8) textile.

4. Véhicule (2), en particulier véhicule ferroviaire, comprenant au moins deux parties de véhicule, en particulier des voitures, qui sont reliées l'une à l'autre par une intercirculation (4) de véhicule et un soufflet (6, 28, 42) à plis suivant l'une des revendications précédentes, qui est disposé sur l'intercirculation (4) de véhicule.
